# EUROPÄISCHE PATENTANMELDUNG

(11) **EP 2 165 867 A1**
(43) Veröffentlichungstag der Anmeldung: **24.03.2010**
(21) Anmeldenummer: 09011889.4
(22) Anmeldetag: 17.09.2009
(51) Int. Cl.: B60H 1/32, F28F 17/00

(54) **Verdampfer mit Kondenswasserüberlaufschutz**

(30) Priorität: 19.09.2008 DE 102008048156
(71) Anmelder: Behr Industry GmbH & Co. KG, 70469 Stuttgart (DE)
(72) Erfinder: Hipp-Kalthoff, Christoph, Dr., 75397 Simmozheim (DE); Voigt, Klaus, Dipl.-Ing.(FH), 74321 Bietigheim-Bissingen (DE); Argento, Alexander A. Dipl.-Ing. (FH), 67071 Ludwigshafen (DE)
(74) Vertreter: Messnarz, Dieter

(57) **Zusammenfassung**

Die Erfindung betrifft einen Verdampfer (1), insbesondere für eine Kraftfahrzeugklimaanlage, welcher zumindest einen im Wesentlichen aus Rohrelementen (3) und Rippenelementen (4) aufgebauten Block (2) aufweist, wobei die Rohrelemente (3) von einem Kältemittel durchströmbar sind, wobei zumindest ein Abschnitt des Blocks (2) mit einem Kondenswasserüberlaufschutz versehen ist, welcher zumindest eine Schwallwand (12) umfasst, wobei die Schwallwand (12) an zumindest einem ersten Abschnitt (18) eine geringere Höhe (h) aufweist, als eine Höhe (H) an zumindest einem an den ersten Abschnitt (18) angrenzenden zweiten Abschnitt (19).

## Beschreibung

Die Erfindung betrifft einen Verdampfer, insbesondere für eine Kraftfahrzeugklimaanlage, gemäß dem Oberbegriff des Anspruchs 1 sowie eine Kraftfahrzeugklimaanlage gemäß dem Oberbegriff des Anspruchs 15.

Aus dem Stand der Technik bekannte Kraftfahrzeugklimaanlagen-Anordnungen weisen in der Regel einen Kältemittelkreislauf auf, in welchem das Kältemittel einen Kondensator, ein Expansionsventil, einen Verdampfer, und einen Kompressor durchläuft. Der Verdampfer wird in dem Kältemittelkreislauf eingesetzt, um von dem ihm vorgeschalteten Expansionsventil dosiert und entspannt eingespritztes Kältemittel von dem flüssigen Zustand in die Gasphase zu überführen. Dabei geht das aus dem Expansionsventil ausgetretene und nicht mehr unter Druck stehende Kältemittel beim Durchlaufen des Verdampfers allmählich in den gasförmigen Zustand über, wozu die vorher im Kondensator der Klimaanlage entzogene Wärme als Verdampfungswärme wieder benötigt wird. Die benötige Wärme wird der durch einen Lüfter vorbeigeführten Innenraumluft des Fahrzeugs entnommen, wodurch kalte Luft entsteht, die wieder zurück in den Fahrzeuginnenraum geleitet wird.

Durch die Abkühlung des Luftstroms im Verdampfer schlägt sich die im Luftstrom enthaltene Feuchtigkeit an der kühlen Oberfläche des Verdampfers nieder, wobei Wassertropfen entstehen, die an der Ausströmseite des Verdampfers aufgrund der Schwerkraft nach unten tropfen, wo sie dann durch eine entsprechende Vorrichtung, wie beispielsweise einen Sammelbehälter, gesammelt und abgeleitet werden.

In DE 44 10 120 C2 ist eine Klimaanlage für ein Kraftfahrzeug beschrieben, bei welcher die sich im Gehäuse der Klimaanlage sammelnde Kondensflüssigkeit auf einfache Weise aufgefangen und aus der Klimaanlage abgeleitet wird. Hierzu ist am Boden des Gehäuses eines Käftemittelverdampfers ein Kanal vorgesehen, der in einem Bereich unterhalb des Verdampfers verläuft und der in eine Öffnung mündet, die an dem tiefsten Punkt unterhalb einer benachbart zu dem Verdampfer angeordneten Heizeinrichtung vorgesehen ist.

Jedoch ist nicht nur eine schnelle und effektive Ableitung des Kondenswassers aus der Klimaanlage heraus wichtig, sondern gerade bei Nutzfahrzeugen wie Schlepper und Traktoren besteht darüber hinaus das Problem des Überlaufens von gesammelten und noch nicht aus der Klimaanlage abgeleiteten Kondenswasser, wenn solch ein Fahrzeug in einem steilen Winkel bergauf oder bergab fährt.

Derartige Nutzkraftfahrzeuge, wie die oben genannten Schlepper und Traktoren, können Steigungen und Gefälle von bis zu 25° ausgesetzt werden. Um ein unerwünschtes Überschwappen des unterhalb des Verdampfers gesammelten Kondenswassers zu vermeiden, wird bei dieser Art von Fahrzeugen als Schutz zusätzlich eine Gehäuseschwallwand vor und hinter dem Verdampfer der Kraftfahrzeugklimaanlage vorgesehen. Andererseits ist gerade bei dieser Art von Nutzfahrzeugen, um die gewünschte Kühlleistung zu erreichen, ein großer Luftstrom erforderlich, der durch den Verdampfer hindurch geleitet wird. Durch Vorsehen der Gehäuseschwallwand wird jedoch der Strömungsquerschnitt bzw. die von dem Luftstrom anströmbare Verdampferoberfläche durch die Schwallwand teilweise versperrt und somit verkleinert, was zu einer unerwünschten Verringerung der Leistung der Kraftfahrzeugklimaanlage führt.

Daher ist es die Aufgabe der vorliegende Erfindung, einen Verdampfer für Kraftfahrzeuge vorzusehen, bei welchem ein effektiver Überschwappschutz vorgesehen wird, der die Kühlleistung nicht oder zumindest zur geringfügtig beeinträchtigt.

Die Aufgabe der vorliegenden Erfindung wird durch einen Verdampfer mit den Merkmalen gemäß Anspruch 1 gelöst. Vorteilhafte Weiterbildungen sind in den Unteransprüchen definiert.

Erfindungsgemäß wird ein Verdampfer, insbesondere für eine Kraftfahrzeugklimaanlage, vorgesehen, welcher zumindest einen im Wesentlichen aus Rohrelementen und Rippenelementen aufgebauten Block aufweist, wobei die Rohrelemente von einem Fluid, insbesondere von einem Kältemittel, durchströmbar sind, wobei zumindest ein Abschnitt des Blocks von einem Kondenswasserüberlaufschutz umgeben ist, welcher zumindest eine Schwallwand aufweist. Die Schwallwand weist erfindungsgemäß an zumindest einem ersten Abschnitt eine geringere Höhe auf, als eine Höhe an zumindest einem an den ersten Abschnitt angrenzenden zweiten Abschnitt. Durch die erfindungsgemäße Konfiguration wird die durch den Luftstrom anströmbare Oberfläche des Verdampfers nur geringfügig verkleinert, da der erste Abschnitt mit einer geringeren Höhe als der zumindest eine zweite, an den ersten Abschnitt angrenzende Abschnitt versehen ist und somit mehr Luft durch den Verdampfer strömen kann, was wiederum zu einer verbesserten Kühlleistung führt. Dadurch, dass der angrenzende Abschnitt jedoch die größere Höhe als der erste Abschnitt aufweist, kann dennoch ein effektiver Schutz gegenüber einem Überschwappen von Kondenswasser aus dem Gehäuse heraus sichergestellt werden.

Gemäß einer bevorzugten Ausführungsform ist der erste Abschnitt bezüglich der Schwallwand mittig angeordnet.

Gemäß noch einer bevorzugten Ausführungsform sind der zweite und dritte Abschnitt bezüglich einer Querachse, die durch den Block und den ersten Abschnitt der Schwallwand verläuft, spiegelsymmetrisch ausgebildet.

Besonders bevorzugt ist es, wenn die Schwallwand in dem zweiten und dritten Abschnitt jeweils ausgehend von dem ersten Abschnitt eine abgeschrägte obere Kante aufweist.

Alternativ kann die Schwallwand in dem zweiten und dritten Abschnitt jeweils ausgehend von dem ersten Bereich auch eine abgerundete obere Kante aufweisen.

Vorzugsweise ist die Höhe in dem zweiten und in dem dritten Abschnitt variabel, wobei die Höhe jeweils zu einer Außenseite der Schwallwand zunimmt.

Noch bevorzugter nimmt die Höhe in dem zweiten und dritten Abschnitt kontinuierlich zu der Außenseite der Schwallwand zu.

Vorzugsweise weist das ist der Kondenswasserschutz an einem Gehäuse vorgesehen, wobei das Gehäuse einen Kondenswasserablauf aufweist.

Noch bevorzugter ist es, wenn in dem Gehäuse ein Kondenswasserschlauch zum Abführen des Kondenswassers aus dem Gehäuse heraus vorgesehen ist.

Gemäß einer bevorzugten Ausführungsform ist der Kondenswasserschlauch seitlich aus dem Gehäuse herausgeführt.

Gemäß noch einer weiteren bevorzugten Ausführungsform liegt das Verhältnis der größten Höhe des zweiten Abschnitts zu der kleinsten Höhe des ersten Abschnitts in einem Bereich von 1,01:1 bis 4:1, und das Verhältnis der größten Höhe des dritten Abschnitts liegt zu der kleinsten Höhe des ersten Abschnitts in einem Bereich von 1,01:1 bis 4:1. Das Verhältnis von der größeren Höhe der äußeren zweiten und dritten Abschnitte zu der geringeren Höhe in dem ersten mittigen Abschnitt wird dabei im Wesentlichen von der Dynamik der Fahrzeugbewegung, der Lage des Ablaufstutzens, der Schräglage des Fahrzeugs und der Weiterführung des Kondenswasserschlauchs bestimmt. Somit ist der Verdampfer durch geeignetes Einstellen der oben genannten Größenverhältnisse auf einfache Art und Weise an die Einsatzbedingungen des Kraftfahrzeugs anpassbar.

Vorzugsweise ist die Schwallwand entlang einer unteren Vorderseite des Blocks und/oder entlang einer unteren Rückseite des Blocks angeordnet, um einen Schutz vor einem Überlaufen des Kondenswassers vorzusehen.

Gemäß noch einer weiteren bevorzugten Ausführungsform sind die Schwallwand an der Vorderseite des Blocks und die Schwallwand an der Rückseite des Blocks im Wesentlichen identisch ausgebildet.

Besonders bevorzugt sind die Schwallwand an der Vorderseite des Blocks und die Schwallwand an der Rückseite des Blocks durch jeweilige Querwände des Gehäuses verbunden, die eine Höhe aufweisen, die zumindest der höchsten Höhe des zweiten und dritten Abschnitts entspricht. Hierdurch wird auch effektiv ein eventuelles seitliches Auslaufen oder Überschwappen von Kondenswasser verhindert.

Erfindungsgemäß wird darüber hinaus eine Kraftfahrzeugklimaanlage vorgesehen, welche zumindest einen Verdampfer der oben beschriebenen Art aufweist. Die erfindungsgemäße Kraftfahrzeugklimaanlage gewährleistet besonders in Nutzfahrzeugen, die für die Überwindung von großen Steigungen und Gefälle eingesetzt werden, eine effektive und zuverlässige Kühlung des Fahrzeuginnenraums.

Im Folgenden wird die Erfindung anhand eines Ausführungsbeispiels unter Bezugnahme auf die Zeichnung detailliert erläutert. In der Zeichnung zeigen:
- Fig.1: eine perspektivische Ansicht eines Verdampfers gemäß dem Stand der Technik;
- Fig. 2: eine Vorderansicht des Verdampfers von Fig. 1;
- Fig. 3: eine perspektivische Ansicht eines Verdampfers gemäß einer Ausführungsform;
- Fig. 4: eine Vorderansicht des Verdampfers von Fig. 3;
- Fig. 5: eine perspektivische Ansicht eines Verdampfers gemäß einer weiteren Ausführungsform;
- Fig. 6: eine Vorderansicht des Verdampfers von Fig. 5;
- Fig. 7: eine weitere Vorderansicht des Verdampfers von Fig. 5; und
- Fig. 8: noch eine weitere Vorderansicht des Verdampfers von Fig. 5.

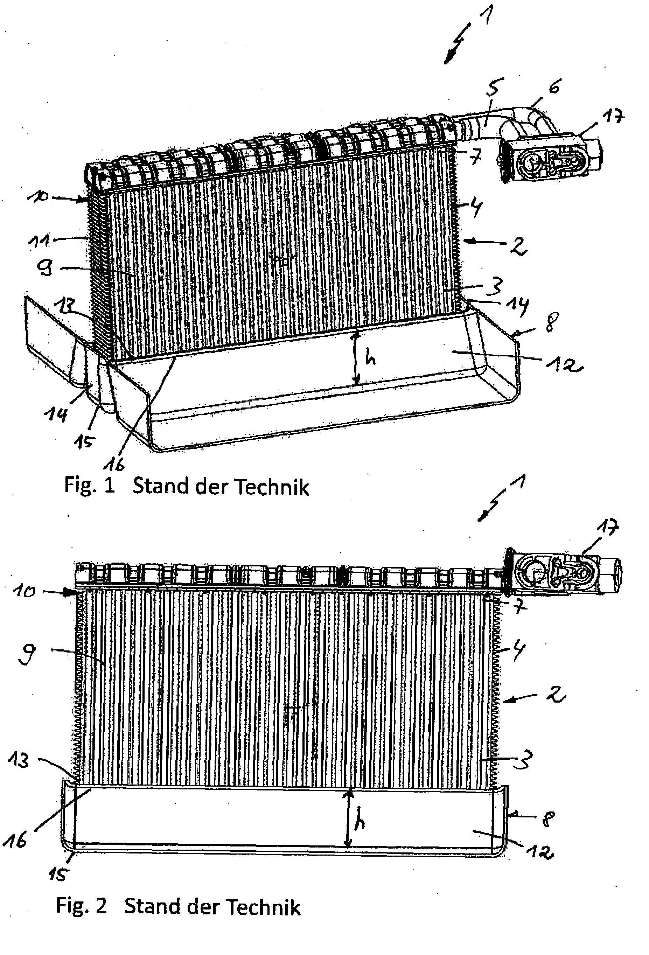

Fig. 1 ist eine perspektivische Ansicht eines Verdampfers 1 gemäß dem Stand der Technik. Der Verdampfer 1 weist einen Block 2 auf, welcher aus einer Vielzahl von parallelen Rohrelementen 3, die als Flachrohre ausgebildet sind, und einer Vielzahl von Rippenelementen 4, die als Wellrippen ausgebildet sind, besteht, wobei die Rohrelemente 3 und die Rippenelemente 4 abwechselnd angeordnet sind. An der Oberseite des Blocks 2 sind ein Einspritzrohr 5 und ein Saugrohr 6 angeordnet, die jeweilig an ein Expansionsventil 17 angeschlossen sind. Nicht weiter in der Figur dargestellt ist ein oberer Sammelkasten, der auf den oberen Abschnitt 10 des Blocks 2 aufsetzbar ist. Das Kältemittel wird durch das Einspritzrohr 5 einigen der oberen Rohrenden 7 der Rohrelemente 3 zugeführt, durch diese hindurch geleitet, tritt an den gegenüberliegen Rohrenden, die in der Figur durch das Gehäuse 8 bzw. die an dem Gehäuse 8 vorgesehene Schwallwand 12 abgedeckt sind aus, wird umgelenkt und durch diejenigen Rohrelemente 3 zurückgeführt, die nicht mit Kältemittel von dem Einspritzrohr 5 versorgt werden, um an dem oberen Abschnitt 10 des Blocks 2 in das Saugrohr 6 zu gelangen und von diesem aus dem Block 2 herausgeleitet zu werden.

Dabei wird das Kältemittel auf die bereits im Zusammenhang mit dem Stand der Technik beschriebene Art und Weise verdampft und Luft auf die ebenfalls dort beschriebene Art und Weise gekühlt, wobei ein relativ warmer Luftstrom im Wesentlichen senkrecht auf die Vorderseite 9 des Blocks 2 auftrifft, durch die Rippenelemente 4 hindurch strömt, und an der Rückseite 11 des Blocks 2 in abgekühlter Form wieder austritt.

Die effektiv von dem Luftstrom anströmbare Fläche an der Vorderseite 9 des Blocks 2 wird dabei durch die an dem Gehäuse 8 ausgebildete Schwallwand 12 stark verkleinert, die einen unteren Abschnitt 13 des Blocks 2 abdeckt. An der Rückseite 11 des Blocks 2 ist eine identisch ausgebildete Schwallwand 12 vorgesehen. Die jeweils an der Vorderseite 9 und der Rückseite 11 angeordneten Schwallwände 12 sind durch Querwände 14 verbunden und bilden zusammen mit den Schwallwänden 12 und einer Unterseite 15 des Gehäuses 8 einen kasten-oder wannenartigen, nach oben offenen Behälter mit einer umlaufenden geraden oberen Kante 16. In der aus dem Stand der Technik bekannten Konfiguration ist die Höhe h sowohl der Schwallwände 12 als auch der Querwände 14 einheitlich.

Figur 2 zeigt eine Vorderansicht des Verdampfers 1 von Figur 1. In der Figur ist besonders gut erkennbar, wie die durch den Luftstrom im Wesentlichen frontal anströmbare Fläche an der Vorderseite 9 des Blocks 2 ungefähr um 20% verkleinert wird, was die Leistung des Verdampfers 1 erheblich beeinträchtigt.

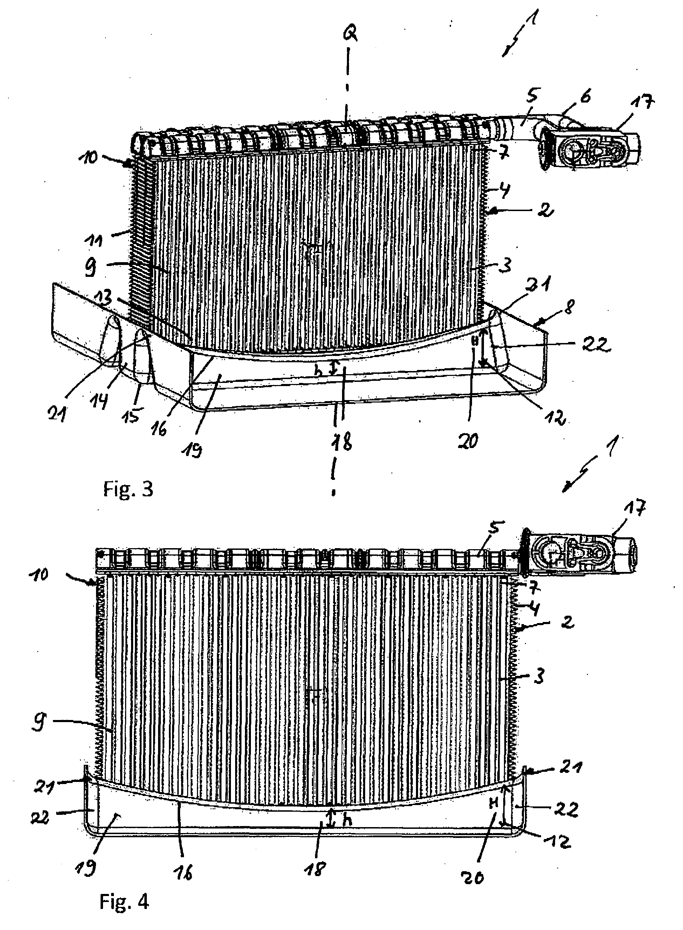

Figur 3 zeigt einen Verdampfer 1 in perspektivischer Ansicht gemäß einer Ausführungsform. Der Verdampfer 1 ist im Wesentlichen wie der bereits im Zusammenhang mit den Figuren 1 und 2 beschriebene Verdampfer 1 aufgebaut und weist einen Block 2 mit abwechselnd angeordneten Rohrelementen 3 und Rippenelementen 4 in Form von Flachrohren und Wellrippen auf. An dem oberen Abschnitt 10 des Blocks 2 sind ebenfalls ein Einspritzrohr 5 und ein Saugrohr 6 vorgesehen, die an ein Expansionsventil 17 angeschlossen sind. Das Kältemittel durchströmt den Block 2 bzw. dessen Rohrelemente 3 auf die bereits beschriebene Art und Weise, wobei Luft, die im Wesentlichen frontal auf die Vorderseite 9 des Blocks 2 auftrifft, abgekühlt an der Rückseite 11 wieder austritt.

Der Verdampfer 1 gemäß der Ausführungsform unterscheidet sich jedoch von dem im Zusammenhang mit Figuren 1 und 2 beschriebenen Verdampfer 1 durch die Ausbildung der an dem Gehäuse 8 vorgesehenen Schwallwände 12, die an der Vorderseite 9 und an der Rückseite 11 des Blocks 2 an dessen unterem Abschnitt 13 angeordnet sind. Die an der Vorderseite 9 und der Rückseite 11 des Blocks 2 angeordneten Schwallwände 12 sind zwar ebenfalls durch jeweilige Querwände 14 miteinander verbunden und bilden einen nach oben offenen Behälter, in dem der untere Abschnitt 13 des Blocks 2 angeordnet ist. Jedoch weisen die Schwallwände 12 jeweils unterschiedliche Abschnitte mit einer unterschiedlichen Höhe h auf.

In der in Figur 4 gezeigten Vorderansicht des Verdampfers 1 von Figur 3 kann erkannt werden, dass im Gegensatz zu der geraden umlaufenden Kante 16 von Figuren 1 und 2 die Kante 16 der Schwallwand 12 abgerundet, so dass die Schwallwand 12 in einem ersten Abschnitt 18, der sich im Wesentlichen in der Mitte der Schwallwand 12 befindet, eine geringere Höhe h aufweist, als die Höhe h an einem zweiten Abschnitt 19 und einem dritten Abschnitt 20, die rechts und links angrenzend an dem ersten Abschnitt 18 angeordnet sind. Der zweite Abschnitt 19 und der dritte Abschnitt 20 sind bezüglich einer Querachse Q des Blocks 2 bzw. der Schwallwand 12 spiegelsymmetrisch ausgebildet. Die an der Rückseite 11 des Blocks 2 vorgesehene Schwallwand 12 ist im Wesentlichen identisch mit der an der Vorderseite 9 vorgesehenen Schwallwand 12 ausgebildet. Durch diese Konfiguration wird die effektiv durch den Luftstrom anströmbare Fläche an der Vorderseite 9 des Blocks 2 im Gegensatz zu einem aus dem Stand der Technik bekannten Verdampfer 1 deutlich vergrößert, wodurch eine Leistungssteigerung des Verdampfers 1 bewirkt wird.

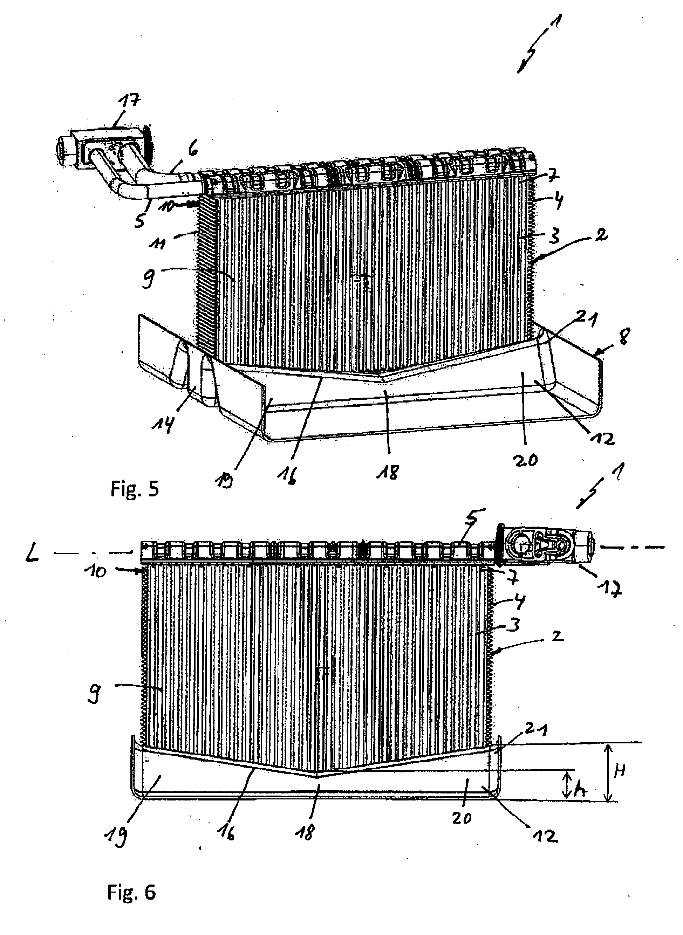

In Figur 5 ist eine perspektivische Ansicht einer weiteren Ausführungsform des Verdampfers 1 gezeigt. Der Verdampfer 1 ist wiederum im Wesentlichen identisch zu den bereits in Zusammenhang mit den Ausführungsformen der Figuren 1 bis 4 beschriebenen Verdampfern 1 aufgebaut, unterscheidet sich aber auch durch die Ausbilddung der Schwallwand 12. Wie in der in Figur 6 gezeigten Vorderansicht des in Fig. 5 gezeigten Verdampfers 1 verläuft in dieser Ausführungsform die obere Kante 16 der Schwallwand im Wesentlichen V-förmig, wobei der tiefste Abschnitt in der Mitte der Schwallwand 12 an dem ersten Abschnitt 18 ausgebildet ist, und wobei die Höhe H in dem zweiten Abschnitt 19 und dem dritten Abschnitt 20 kontinuierlich zu einer jeweiligen Außenseite 21 des Blocks 2 zunimmt bzw. ansteigt. Das Verhältnis der höchsten Höhe H des zweiten Abschnitts 19 bzw. des dritten Abschnitts 20 zu der geringsten Höhe h des ersten Abschnitts 18 H : h kann, um einen effektiven Überschwappschutz zu bieten, in einem Bereich von 1,001 : 1 bis 4 : 1 liegen. Dabei ist es wichtig, dass die höchste Höhe H an den jeweiligen äußeren Randbereichen 22 des zweiten Abschnitts 19 und des dritten Abschnitts 20 vorhanden ist. Wenn der Verdampfer 1 im Fahrzeug derartig angeordnet ist, dass die Längsachse L des Verdampfers im Wesentlichen parallel zu der Längsachse eines Kraftfahrzeugs ausgerichtet ist, wird in dem durch die zwei Schwallwände 12, die Querwände 14 und die Unterseite 15 des Gehäuses 8 gebildeten wannenartigen Behälter das an den Rohrelementen 3 und Wellrippen 4 kondensierende Wasser aufgefangen und schwappt beim Beschleunigen bzw. Drosseln der Fahrzeuggeschwindigkeit in Richtung der äußeren Randbereiche 22, wo es durch die höhere Ausgestaltung der Schwallwand 12 in diesen Bereichen davon abgehalten wird, über die Wand hinweg überzulaufen. Da die auftretenden Querbeschleunigungen, die auf das gesammelte Kondenswasser einwirken, vergleichsweise gering sind, ist es möglich den mittleren ersten Abschnitt 18 mit einer geringeren Höhe h auszubilden, so dass die effektiv anströmbare Fläche an der Vorderseite 9 des Blocks 2 zur Leistungssteigerung vergrößert wird.

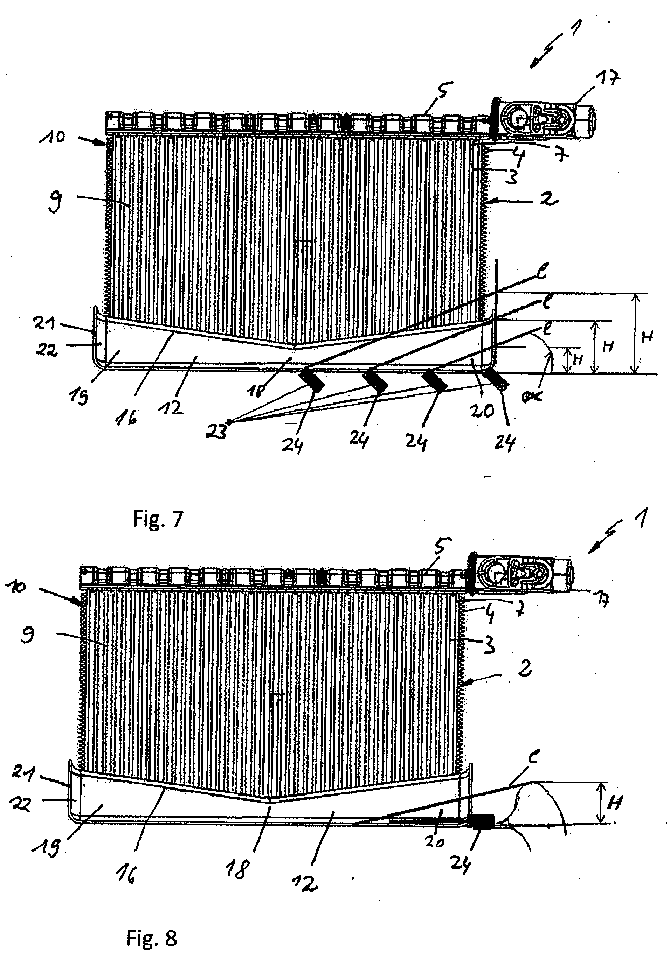

Fig. 7 zeigt eine weitere Vorderansicht des Verdampfers 1 von Fig. 5, wobei durch die Linien I verschiedene Schrägstände eines Kraftfahrzeugs angedeutet sind, durch die einerseits die mindestens für eine Überlaufschutz erforderliche Höhe H der Schwallwand 12 bestimmt wird, und andererseits auch der Ablaufwinkel α des Kondenswasser im Zusammenhang mit dem Schrägstand des Kraftfahrzeugs dargestellt wird, der wiederum die Lage eines Kondenswasserablaufs 23 bestimmt, dem das Kondenswasser mittels der in der Figur angedeuteten Schläuche 24 zugeführt wird. In der Figur sind verschiedene maximale Schräglagen eines Kraftfahrzeugs dargestellt, denen jeweils eine bestimmten maximale Höhe H der Schwallwand 12 und eine bestimmte Position eines Schlauchs 24 zugeordnet ist. Tatsächlich ist jedoch ein einziger Schlauch 24 ausreichend, um das aufgesammelte Kondenswasser abzuführen.

Schließlich zeigt Figur 8 noch eine weitere Vorderansicht des Verdampfers 1 von Fig. 5. In dieser Ausführungsform ist der Schlauch 24 verlegt, um seitlich durch die Querwand 14 auszutreten. Die durch die Linie I angedeutete und durch die Schräglage bedingte zumindest erforderliche Höhe H der Schwallwand 12, um einen Überlaufschutz zu bieten, ist ebenfalls dargestellt.

Insgesamt betrachtet kann durch die erfindungsgemäße Konfiguration ein Verdampfer mit verbesserter Leistung insbesondere für Kraftfahrzeuge bereitgestellt werden, die ausgelegt sind, um extreme Steigungen und Gefälle zu überwinden.

### Bezugszeichenliste

- 1: Verdampfer
- 2: Block
- 3: Rohrelement
- 4: Rippenelement
- 5: Einspritzrohr
- 6: Saugrohr
- 7: oberes Rohrende des Rohrelements
- 8: Gehäuse
- 9: Vorderseite des Blocks
- 10: oberer Abschnitt des Blocks
- 11: Rückseite des Blocks
- 12: Schwallwand
- 13: unterer Abschnitt des Blocks
- 14: Querwand
- 15: Unterseite des Gehäuses
- 16: Kante
- 17: Expansionsventil
- 18: erster Abschnitt
- 19: zweiter Abschnitt
- 20: dritter Abschnitt
- 21: Außenseite
- 22: äußerer Randbereich
- 23: Kondenswasserablauf
- 24: Schlauch
- Q: Querachse
- L: Längsachse
- I: Linie

## Patentansprüche

1. Verdampfer (1), insbesondere für eine Kraftfahrzeugklimaanlage, welcher zumindest einen im Wesentlichen aus Rohrelementen (3) und Rippenelementen (4) aufgebauten Block (2) aufweist, wobei die Rohrelemente (3) von einem Kältemittel durchströmbar sind, wobei zumindest ein Abschnitt des Blocks (2) von einem Kondenswasserüberlaufschutz umgeben ist, welcher zumindest eine Schwallwand (12) umfasst, **dadurch gekennzeichnet, dass** die Schwallwand (12) an zumindest einem ersten Abschnitt (18) eine geringere Höhe (h) aufweist, als eine Höhe (H) an zumindest einem an den ersten Abschnitt (18) angrenzenden zweiten Abschnitt (19).

2. Verdampfer (1) nach Anspruch 1, **dadurch gekennzeichnet, dass** der erste Abschnitt (18) bezüglich der Schwallwand (12) mittig angeordnet ist.

3. Verdampfer (1) nach Anspruch 2, **dadurch gekennzeichnet, dass** der zweite und dritte Abschnitt (19, 20) bezüglich einer Querachse (Q), die durch den Block (2) und den ersten Abschnitt (18) verläuft, spiegelsymmetrisch ausgebildet sind.

4. Verdampfer (1) nach Anspruch 2 oder 3, **dadurch gekennzeichnet, dass** die Schwallwand (12) in dem zweiten und dritten Abschnitt (19, 20) jeweils ausgehend von dem ersten Abschnitt (18) eine abgeschrägte obere Kante (16) aufweist.

5. Verdampfer (1) nach einem oder mehreren der Ansprüche 2 oder 3, **dadurch gekennzeichnet, dass** die Schwallwand (12) in dem zweiten und dritten Abschnitt (19, 20) jeweils ausgehend von dem ersten Abschnitt (18) eine abgerundete obere Kante (16) aufweist.

6. Verdampfer (1) nach einem oder mehreren der Ansprüche 2 bis 4, **dadurch gekennzeichnet, dass** die Höhe (H) in dem zweiten und in dem dritten Abschnitt (19, 20) variabel ist, wobei die Höhe (H) jeweils zu einer Außenseite (21) der Schwallwand (12) zunimmt.

7. Verdampfer (1) nach einem oder mehreren der Ansprüche 2 bis 6, **dadurch gekennzeichnet, dass** die Höhe (H) in dem zweiten und dritten Abschnitt (19, 20) kontinuierlich zu der Außenseite (21) der Schwallwand (12) zunimmt.

8. Verdampfer (1) nach einem oder mehreren der Ansprüche 2 bis 7, **dadurch gekennzeichnet, dass** das Verhältnis H:h der größten Höhe (H) des zweiten Abschnitts (19) zu der kleinsten Höhe (h) des ersten Abschnitts (18) in einem Bereich von 1,01:1 bis 4:1 liegt, und dass das Verhältnis H:h der größten Höhe (H) des dritten Abschnitts (20) zu der kleinsten Höhe (h) des ersten Abschnitts (18) in einem Bereich von 1,01:1 bis 4:1 liegt.

9. Verdampfer (1) nach einem oder mehreren der Ansprüche 1 bis 7, **dadurch gekennzeichnet, dass** der Kondenswasserschutz an einem Gehäuse (8) vorgesehen ist, wobei das Gehäuse (8) mit einem Kondenswasserablauf (23) versehen ist.

10. Verdampfer (1) nach Anspruch 9, **dadurch gekennzeichnet, dass** in dem Gehäuse (8) ein Schlauch (24) zum Abführen des Kondenswassers aus dem Gehäuse (8) heraus vorgesehen ist.

11. Verdampfer (1) nach einem oder mehreren der Ansprüche 1 bis 10, **dadurch gekennzeichnet, dass** die Schwallwand (12) entlang einer unteren Vorderseite (9) des Blocks (2) und/oder entlang einer unteren Rückseite (11) des Blocks (2) angeordnet ist, um einen Schutz vor einem Überlaufen des Kondenswassers vorzusehen.

12. Verdampfer (1) nach Anspruch 11, **dadurch gekennzeichnet, dass** die Schwallwand (12) an der Vorderseite (9) des Blocks (2) und die Schwallwand (12) an der Rückseite (11) des Blocks (2) im Wesentlichen identisch ausgebildet sind.

13. Verdampfer (1) nach Anspruch 11 oder 12, **dadurch gekennzeichnet, dass** die Schwallwand (12) an der Vorderseite (9) des Blocks (2) und die Schwallwand (12) an der Rückseite (11) des Blocks (2) durch jeweilige Querwände (14) des Gehäuses (8) verbunden sind, die eine Höhe aufweisen, die zumindest der größten Höhe (H) des zweiten und dritten Abschnitts (19, 20) entspricht.

14. Verdampfer (1) nach einem oder mehreren der Ansprüche 10 bis 13, **dadurch gekennzeichnet, dass** der Schlauch (24) seitlich an einer Querwand (14) durch diese herausgeführt ist.

15. Kraftfahrzeugklimaanlage, **dadurch gekenntzeichnet, dass** die Kraftfahrzeugklimaanlage zumindest einen Verdampfer (1) nach einem oder mehreren der Ansprüche 1 bis 14 aufweist.
